Europäisches Patentamt

European Patent Office

Office européen des brevets

(19)

(11) Publication number: **0 024 434**

**B1**

(12) **EUROPEAN PATENT SPECIFICATION**

(45) Date of publication of patent specification: **09.05.84**

(51) Int. Cl.³: **G 06 F 9/46**

(21) Application number: **80900425.2**

(22) Date of filing: **20.02.80**

(86) International application number:
**PCT/JP80/00023**

(87) International publication number:
**WO 80/01850 04.09.80 Gazette 80/20**

(54) **VIRTUAL MACHINE SYSTEM.**

(30) Priority: **21.02.79 JP 19440/79**

(43) Date of publication of application:
**11.03.81 Bulletin 81/10**

(45) Publication of the grant of the patent:
**09.05.84 Bulletin 84/19**

(84) Designated Contracting States:
**DE FR GB**

(56) References cited:
GB - A - 1 431 423
JP - A - 49 047 047
JP - A - 50 009 507
JP - A - 50 023 146
JP - A - 54 018 639
JP - B - 50 009 507
US - A - 3 611 307
US - A - 3 614 742
US - A - 3 984 820

IBM TECHNICAL DISCLOSURE BULLETIN, vol.
21, no. 3, August 1978, NEW YORK (US)
WINGERT: "Virtual 1/0 Interrupt", page 986

(73) Proprietor: **FUJITSU LIMITED**
**1015, Kamikodanaka Nakahara-ku**
**Kawasaki-shi Kanagawa 211 (JP)**

(72) Inventor: **KANEDA, Saburo**
**828, Kandaiji, Kanagawa-ku Yokohama-shi**
**Kanagawa 221 (JP)**
Inventor: **MATSUMURA, Naomi**
**4-7, Kakinokizaka 2-chome Meguro-ku**
**Tokyo 152 (JP)**
Inventor: **IKEGAMI, Fujio**
**76-3, Mutsukawa 3-chome Minami-ku,**
**Yokohama-shi**
**Kanagawa 232 (JP)**
Inventor: **SHIMIZU, Kazuyuki**
**19-22, Ogawa 2-chome Machida-shi**
**Tokyo 194 (JP)**
Inventor: **IKUTA, Yukichi**
**3-1-2-304, Ochiai, Tama-shi**
**Tokyo 192-02 (JP)**

(74) Representative: **Allman, Peter John (GB) et al,**
**Marks & Clerk Scottisch Life House Bridge Street**
**GB-Manchester M3 3DP (GB)**

## Description

The present invention relates to a virtual machine system and, more particularly, relates to a virtual machine system provided with management programs which are used for running a plurality of operating systems in parallel.

In recent years, the concepts of virtual storage and virtual machines have been of increasing interest in the computing community. A virtual storage system may be defined generally as any information storage system in which there is, or may be, a distinction between the logical address generated by a program and the physical address for some real storage device from which information is actually fetched. Similarly, a virtual machine system may be defined as a computing system in which the instructions issued by a program may be different from those actually executed by the hardware to perform a given task. The above concepts of virtual storage and virtual machines are very important when creating a large capacity computing system. The present invention, specifically relates to virtual machines rather than to virtual storage.

As will be explained hereinafter in detail, a virtual machine when compared to a conventional native machine has the advantage that a plurality of programs, each of which runs in one of a corresponding plurality of operating systems, can be executed in parallel and also the organization of the computing system can be flexibly modified. However, the virtual machine when compared to the conventional native machine has the disadvantage that it often operates with a reduction of capacity due to the occurrence of a so-called overhead.

(It should be pointed out here that the terms "native machine" and "real machine", used throughout the specification are in fact synonomous).

G.B. Patent Specification No. 1 431 423 discloses a virtual machine of the prior art which is subject to the above-mentioned overhead and contains a further explanation of the characteristics of virtual machine systems.

It is an object of the present invention to privide a virtual machine system which obviates or mitigates the problem of reduced capacity due to the above-mentioned overhead.

According to the present invention, there is provided a virtual machine system provided with management programs which are used for running a plurality of operating systems in parallel, the virtual machine system including:

a real machine controlling PSW (Program status word) register which stores the PSW information, including at least one interrupt mask bit, currently controlling the real machine hardware, characterised in that the virtual machine system further comprises
a virtual machine controlling PSW register which stores the PSW information, including at least one interrupt mask bit, controlling the operating system currently being run on the real machine;

a modification register which stores information including at least one interrupt mask bit, relating to operating systems other than the one currently being run;

a pending register which stores information indicating that an interrupt is pending for the operating system currently being run on the real machine;

a first gating means having inputs connected to the virtual machine controlling PSW register and to the modification register the first gating means being operative to cause the PSW information in the real machine controlling PSW register to indicate that an interrupt is to be effective, even when the virtual machine controlling PSW register indicates that said interrupt is to be masked, if the information contained in the modification register indicates that the said interrupt is to be effective for an operating system other than the one currently being run, in which case information concerning a possible interrupt is stored as an interrupt pending for said other operating system; and

a second gating means having inputs connected to the virtual machine controlling PSW register and to the pending register, the second gating means being operative to pass the information concerning a pending interrupt contained in the pending register if the PSW information in the virtual machine controlling PSW register indicates that said interrupt is to be effective so that the pending interrupt, with respect to the operating system currently being run on the real machine, is communicated to this operating system.

Features relating to particular embodiments of the invention will be apparent from the attached subsiduary claims.

Embodiments of the prior art and of the present invention will now be described, by way of example with reference to the accompanying drawings, in which:

Fig. 1 illustrates the organization of a conventional native computing system;

Fig. 2 illustrates the organization of a conventional virtual machine system;

Fig. 3 is a block diagram illustrating the organization of address spaces and the addressing processes in a conventional virtual storage system;

Fig. 4 is a flowchart illustrating the operation of a virtual machine monitor incorporated in a conventional virtual machine system;

Fig. 5 is a block diagram illustrating hardware employed in a virtual machine system according to the present invention, and;

Fig. 6 illustrates a conventional organization of a main storage area which is suitable for operating the hardware of Fig. 5.

The concept of the "virtual machine" was proposed in the latter half of the year 1960 and many attempts have been made to put the concept of "a virtual machine" into practice. The merits of the "virtual machine" may be classified into two areas as described in the following paragraphs (A) and (B).

(A) a system can be realized using a single hardware in which each one of a plurality of users can utilize a single computing system in the same way as would be the case if each user exclusively occupied the single computing system.

(B) It is possible to create an imaginary computing system which is composed of an architecture which is slightly different from that of the real computing system and it is also possible to create an imaginary computing system which has an organization which is slightly different from that of the real computing system.

Thus, as previously mentioned, the virtual machine has the advantage in that, as compared to a conventional native machine, a plurality of programs can be run in respective ones of a corresponding plurality of operating systems (hereinafter referred as OS), and also organization of a computing system can be flexibly modified. Further, it is possible to supervise the operation of the system, and furthermore it is possible for each user to utilize the debugging function of the system itself.

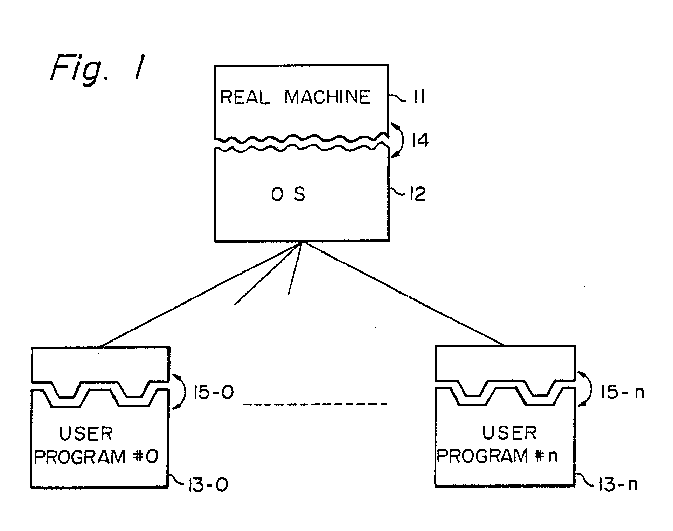

In Fig. 1, which illustrates the organization of a conventional native computing system, part 11 represents a real machine, that is a hardware of the computing system, and part 12 represents the OS. A plurality of user programs 13-o through 13-n are executed under the control of the OS 12. Accordingly, the OS 12 manages the user programs 13-o through 13-n so that the user programs may commonly occupy the system resources. The term "system resources" means, for example, a CPU (central processing unit), a main storage device, I/O (Input/Output) control devices, I/O devices, a system console and so on. The OS 12 cooperates with the real machine 11 via an imaginary hardware interface 14. The user programs cooperate with the OS 12, via user program/OS interfaces 15-o through 15-n, respectively.

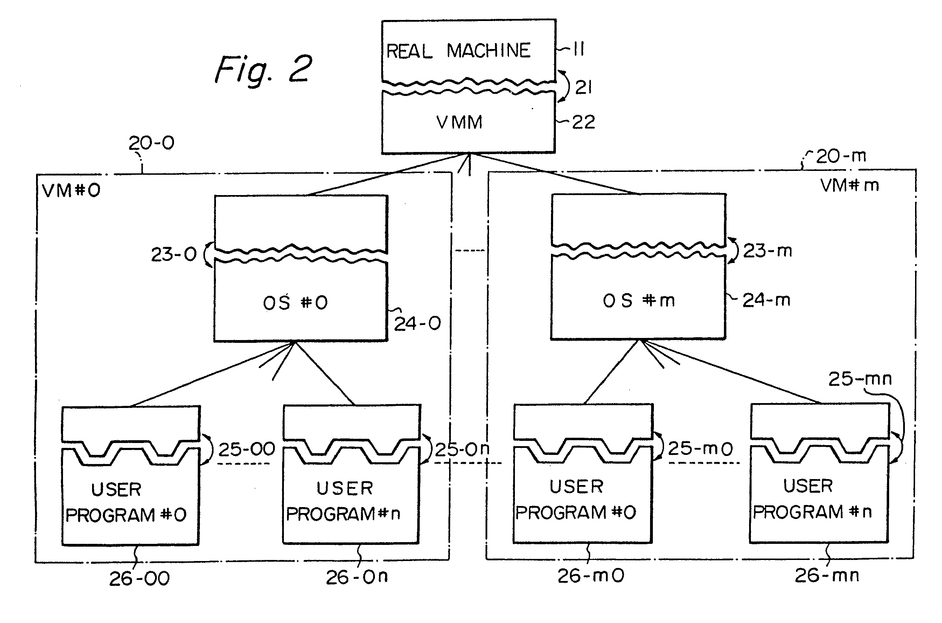

Contrary to the above, in virtual machine systems, a VMM (virtual machine monitor), instead of the OS shown in Fig. 1, manages the user programs, so that the user programs may commonly occupy the computer resources. In Fig. 2, which illustrates the organization of a conventional virtual machine system, blocks 20-o through 20-m which are enclosed by long and short dash lines, respectively represent VW (virtual machine) #o through VM#m. Each of the VMs 20-o through 20-m corresponds to the conventional native computing system shown in Fig. 1. In the virtual machine system of Fig. 2, it is possible for the VMs 20-o through 20-m to run in the system in parallel. Conventional virtual machine systems are described in many publications, for example, "Survey of Virtual Machine Research" by Robert P. Goldberg, Honeywell Information Systems and Harvard University, pages 34 through 45, and "The evolution of virtual machine architecture" by J. P. Buzen and U. O. Gagliardi, Honeywell Information Systems, Inc. Billerica, Massachusetts and Harvard University Cambridge, Massachusetts, of the National Computer Conference, 1973, pages 291 through 299.

In a typical native computing system, multiprogramming is often employed to increase efficiency. Multiprogramming enables all the programs to commonly share the system resouces. As mentioned above management of the system resources is achieved by the OS. The OS can access the system resources by using "privileged" instructions. "Privileged" instructions can be issued only from the OS, whereas the user programs can issue only "non-privileged" instructions. The terms "privilege" and "non-privilege" are widly used and well understood in the computing community and the interrelationship will not be described in detail herein.

In the conventional virtual machine system of Fig. 2, a plurality of OSs 24-o through 24-m run in parallel and accordingly the system resources (not shown) are managed under control of a program which is called a VMM (virtual machine monitor) (see the reference numeral 22), instead of the OS, as occurs in the conventional native computing system. In this case, the "non-privileged mode is allotted to both the user programs (26-oo through 26-on, 26-mo through 26-mn) and the corresponding OS(24-o~24-m), while only the VMM 22 operates under the privileged mode. Accordingly, if when the OS which controls some user programs, issues a privileged instruction, the hardware detects, simultaneously, the program interrupt. Then the interruption is transferred to the VMM 22, and the VMM 2 starts executing the simulation of said privileged instruction. The VMM 22 cooperates with real machine 11 via a hardware interface 21. The OSs 24-o through 24-m cooperate with the VMM 22 via hardward interfaces 23-o through 23-m, respectively. In the VM 20-o, the user programs 26-oo through 26-on cooperate with the corresponding OS 24-o via user/OS interfaces 25-oo through 25-on, respectively. In the VM20-m, the user programs 26-mo through 26-mn cooperate with the corresponding OS 24-m via user/OS interfaces 25-mo through 25-mn.

In the virtual machine system, as previously mentioned, a plurality of OSs run in parallel. Therefore, it is preferable to have the same amount of memory space as the main storage of the real machine. The memory space is defined by a value produced from the following product, that is (ordinary space)×(the number of OSs). In the prior art, the above mentioned virtual storage is utilized in the system so as to economically obtain the required space. In this case, as will be mentioned hereinafter, the management of the main storage is achieved by the VMM. Consequently, the VMM performs characteristic functions mentioned in the following paragraphs (C) through (E).

(C) The VMM controls each user program together with the corresponding OS so as to share the system resources with a high degree of efficiency.

(D) The VMM simulates the privileged instruction which is issued by the operating system.

(E) The VMM receives all the interrupts, such as an I/O interrupt, and external interrupt, an interrupt for controlling the virtual storage and so on, and then the VMM carries out a process in accordance with the respective sources of said interrupts. The VMM may also indicate each occurrence of said interrupts to the corresponding OS, if necessary.

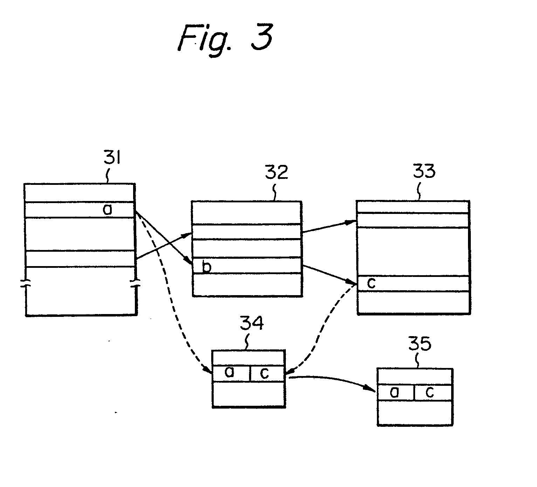

The management of the main storage in the virtual machine system will be explained below. Fig. 3 illustrates blocks used for explaining one example of both the address spaces and the addressing processes. Specifically the example to which Fig. 3 relates corresponds to a case where the OS which runs in the virtual machine system employs virtual storage. In Fig. 3, both a virtual address 31 and a real address 32 are addresses of the virtual storage, both of which are managed by the OSs (24-o through 24-m in Fig. 2). The relationship between the addresses 31 and 32 is defined by a DAT (dynamic address translation) table (not shown). The DAT table is managed by each OS. In conventional non-virtual machine systems, such a real address corresponds to the real address 32, of the main storage. However, in the virtual machine system, since a plurality of OSs exists therein at the same time, the real machine 11 has, in its real storage area, insufficient address space for accommodating the real address. Therefore, in the virtual machine system, the logical address of VM (31) is transformed into the real address of VM (32). The address translation is controlled by the DAT table managed by the OS. The real address of VM (32), assumed as a logical address of a real machine, is translated into a real address of real machine (33). The address translation is controlled by the DAT table managed by the VMM. However, the system which employs dual-paging is liable to create a very heavy overhead in view of the capacity of the system. Therefore, in order to increase the capacity of the system, the VMM manages the space of the main storage by means of a shadow table 34, and thereby the processing speed of the system greatly increases. The shadow table 34 is considered to be a combination of the two aforesaid DAT tables. In other words, the VMM manages a translation table between the logical address (31) which is managed by the OSs and the main storage address (33). If one of said two DAT tables is updated, the VMM must reflect the update to the shadow table 34. The reference numeral 35 represents a TLB (translation look-aside buffer). The VMM may utilize the TLB 35, if necessary, in order to further increase said processing speed.

The management of the main storage in the CPU has been mentioned hereinbefore. Now the process performed with respect to the channel by the VMM will be mentioned below. It should be noted that, generally, the real machine may mainly be classified into said CPU and said channel. When the OS of the VM provides an instruction for starting an I/O device, which instruction is the privileged instruction, the VMM collects this instruction through a synchronous interrupt operation. A channel program for starting the I/O device by said OS of the VM, is expressed by the real address which is managed by the OS. Accordingly, the channel program is reconstructed, by the VMM, in the main storage which is managed by the VMM, and then a data address, a CCW (channel command word) address and so on, are retranslated into the real address in the real machine. Consequently, the CCW which may be modifed by the user program, is not effective at any time.

As will be understood from the above description, the overhead which may be created in the virtual machine system, is very much larger than the overhead which may be created in the system to be operated, as occurs in the usual manner, by the OS, during the execution of the same program. The overhead is basically classified into a direct overhead and an indirect overhead. The former and latter overheads will be explained in the following paragraphs (F) and (G), respectively.

(F) Direct Overhead

The direct overhead is mainly created during the process of the software being processed by the VMM, and several kinds of overheads exist in the system, which overheads are described below.

(a) A first overhead is created during the simulation of the privileged instruction. As previously mentioned, since the non-privileged mode is allotted to each user program together with the corresponding OS, the privileged instructions which are issued by the OS, are all simulated by the VMM.

(b) A second overhead is created during the dispatching of the user program.

(c) A third overhead is created when the function of the virtual storage is supported by the OS. The third overhead corresponds to the overhead which is created during the management of the above mentioned shadow table.

(d) A fourth overhead is created during the conversion of the channel program. In this case, since the channel program, which is used for starting the I/O device by the OS, is the logical address for the real machine point of view, the VMM translates the logical address to the real address for the real machine.

(e) A fifth overhead is created during the support of the interrupt. In the conventional virtual machine, since all the interrupts are collected by the VMM through the synchronous interrupt operation, it is required for the system to reflect the presence of the interrupt to the corresponding OS. Thus, the VMM carries out the operation for reflecting said interrupt to said OS.

(f) A sixth overhead is created during the support of the function of a console. The VMM carries out the support of the function of the console and also the debugging function.

(G) Indirect overhead

The OS incorporates various kinds of algorithm to control the allocation of the system resources and also to control the management thereof, so as to utilize the system resources with a high degree of efficiency. However, an OS incorporating such algorithms often includes a bad effect when used in virtual machine systems.

In connection with the above item (a), that is the first overhead created during the simulation of the privileged instruction, this privileged instruction may basically be classified into one of four kinds of privileged instructions, in view of the function thereof.

(1) The first kind is a privileged instruction which is used for controlling a PSW (program status word).

(2) The second kind is a privileged instruction which is used for controlling a timer. The timer is employed in the system so as to attain a time-sharing processing, for example a CPU timer.

(3) The third kind is a privileged instruction which is used for the management of the virtual storage.

(4) The fourth kind is a privileged instruction used for controlling other operations required in the system.

The function of the above mentioned privileged instructions and also the process for the simulation thereof, will be explained below.

① The first privileged instruction which is used for controlling the PSW

The PSW of the systems is utilized by every VM under the time-sharing mode, and accordingly, the PSW of each VM is allocated in the main storage as an actually existing PSW. Generally, the PSW has a mask against the interrupt, which mask functions to control asynchronous interrupts, such as an I/O interrupt, an external interrupt and so on, and thereby the system resources, such as the I/O devices, the external devices and so on, can be commonly shared by each VM. In this case, the privileged instruction used for controlling the PSW is simulated in the following manner.

(1a) Although the PSW is instructed to close the mask against the interrupt, that is the interrupt is inhibited by the mask, a current PSW is set in a status so as not to close said mask, where the current PSW is used for controlling the hardware. Specifically, even if the I/O interrupt that corresponds to the instruction for starting the I/O device which is generated during the operation of, for example the VM 20-o (see Fig. 2) is generated during the operation of, for example, the VM 20-m (see Fig. 2), the I/O interrupt is always accepted by the VMM.

(1b) If the PSW is instructed to open the mask against the interrupt, that is the interrupt becomes effective, the current PSW, which controls the hardware, is set with the information in accordance with said privileged instruction. Next, the VMM checks whether or not the asynchronous interrupt, with respect to said VM, is pending. If said asynchronous interrupt is pending, the VMM operates so as to reflect the pending asynchronous interrupt to the said VM.

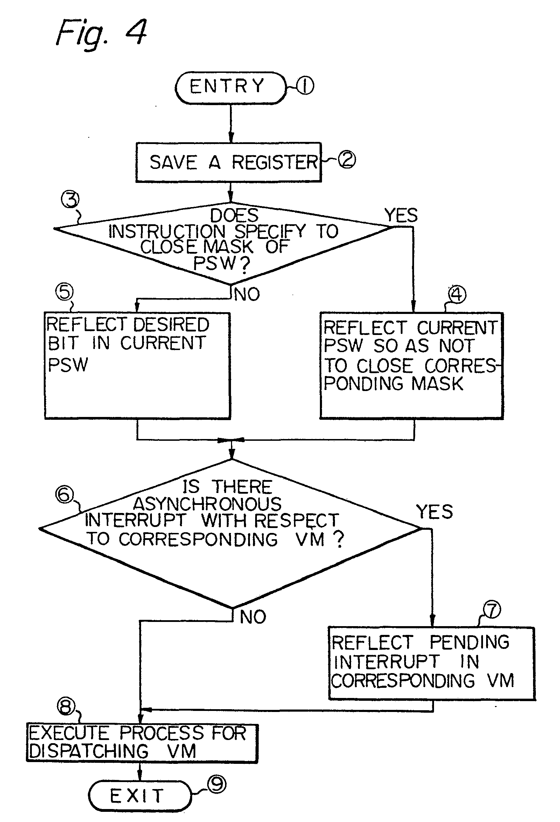

The processes mentioned in the above paragraphs (1a) and (1b), are schematically revealed in the flowchart of Fig. 4. The details of this flowchart will be explained hereinafter.

② The second privileged instruction which is used for controlling the timer

Timers are utilized by each VM under a time-sharing mode and also by the VMM as a timer for dispatching $VM_s$. Accordingly, a system timer used for dispatching and VM timers employed in each VM, are located in the main storage as actually existing logical timers. When the (m+1) $VM_s$, that is the $VM_s$ 20-o through VM 20-m (refer to Fig. 20, are being operated under the control of the VMM, the minimum value of time determined by the aforesaid timers, is set in the system timer. That is, if a privileged instruction is detected by the hardware, which privileged instruction is used for setting the timer of any one VM, the time specified by this VM timer is compared with the present time specified by the system timer, and either one of the times, whichever has the minimum value, is set in the system timer. And when the interrupt of a timer is indicated to the VMM, the times, which are stored in the main storage of each of said timers of the $VM_s$ and said system timer for dispatching, are updated. Then the VMM discriminates whether said interrupt of the timer is the interrupt of the timer for the VM or the interrupt of the system timer. If the VMM determines that said interrupt of the timer is the interrupt of the system timer, a dispatching operation starts which is conducted by the VMM in accordance with a routine for processing the dispatching operation. On the contrary, if the VMM determines that said interrupt of the timer is the interrupt of the VM timer, the VMM operates so as to reflect the interrupt of the timer with respect to the corresponding VM.

③ The third privileged instruction used for the management of the virtual storage

Such privileged instruction may be classified into three instructions mentioned in the following items (3a), (3b), (3c).

(3a) A first instruction for reading from or writing into a key storage.

(3b) A second instruction for translating the logical address into the real address.

(3c) A third instruction for reading from or writing into a prefix register.

As previously mentioned with reference to Fig. 3, if each of the $VM_s$ operates by utilizing the virtual storage, the real address space which is managed by the OS of the corresponding VM is considered, in the virtual machine system, to be the logical address space by the VMM. Therefore, the VMM manages the space of the main storage in the real machine by means of the aforesaid dual-paging and shadow table.

Thus, the third privileged instruction is simulated by the VMM, in which the VMM operates to translate the real address into the real key by means of both the DAT table which is managed by the OS of the corresponding VM and the DAT table which is managed by the VMM itself.

④ The fourth privileged instruction used for controlling other operations required in the system

The fourth privileged instruction is specifically a privileged instruction used for detecting a CPU identifier and a channel identifier, a privileged instruction used for starting the I/O device and so on. The executions of these privileged instructions are simulated by the VMM.

As mentioned above, although the conventional virtual machine systems produce various kinds of merits, they also induce, simultaneously, a reduction of capacity due to the creation of overheads.

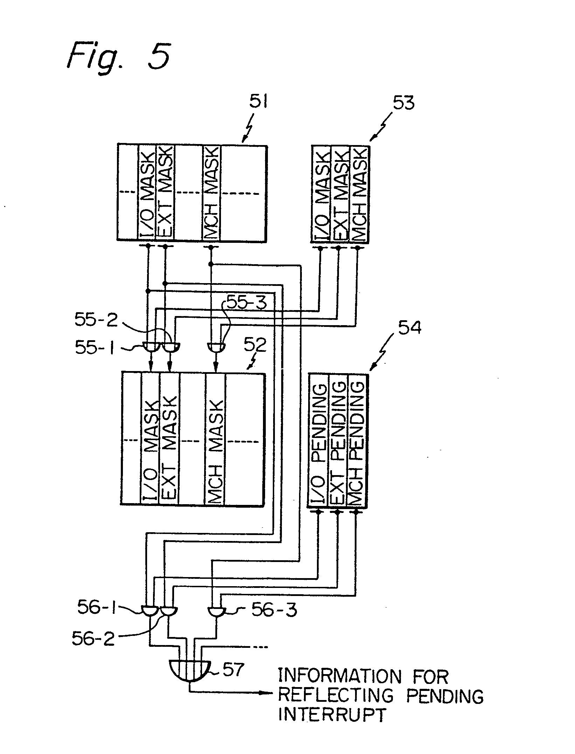

The virtual machine system of the present invention which is described below with reference to Fig. 5 is very useful for suppressing the overhead which is created during the simulation of the privileged instruction which is used for controlling the PSW (refer to the above recited paragraph ①).

With reference to Fig. 4 and paragraph ① above, in the conventional virtual machine system, the VMM simulates the privileged instruction used for controlling the PSW according to the routine revealed by the flowchart of Fig. 4. The routine contains nine steps, ① through ⑨. It should be understood that the steps ① through ⑨ are conducted under the control of the VMM for the purpose of eliminating the destruction of a process currently being executed by one VM, which destruction may occur if another VM also executes its own process independently, irrespective of the process executed by said one VM. Usually, it is necessary for the VMM to execute about four hundred sub-steps for completing the steps ① through ⑨ in Fig. 4. Therefore, the amount of software to be conducted by the VMM becomes very large. As is explained below, the virtual machine system of the present invention includes no such large amount of software, and the same functions which would have been performed by the software of the prior art, can be achieved by very simple hardware, instead of said software.

Returning to Fig. 4, the step ① ("ENTRY") denotes the entry of the routine. In the step ② ("SAVE A REGISTER"), the register is saved by the VMM, which register stores the last information with respect to the currently executing VM in order to save the information from destruction induced by the incoming privileged instruction. In the step ③ ("DOES INSTRUCTION SPECIFY TO CLOSE MASK OF PSW?"), if the result is "YES", the step ④ ("REFLECT CURRENT PSW SO AS NOT TO CLOSE CORRESPONDING MASK") is executed, which step ④ corresponds to the process mentioned in the above item (1a) of paragraph ①. Contrary to the above, if the result of the step ③ is "NO", the step ⑤ ("REFLECT DESIRED BIT IN CURRENT PSW") is executed, which step ⑤ corresponds to the process mentioned in the above item (1b) of paragraph ①. The step ⑥ ("IS THERE PENDING ASYNCHRONOUS INTERRUPT WITH RESPECT TO CORRESPONDING VM?" follows after the step ④ or ⑤. If the result of the step ⑥ is "YES", the step ⑦ ("REFLECT PENDING INTERRUPT IN CORRESPONDING VM") is executed. Contrary to the above, if the result of the step ⑥ is "NO", the step ⑧ ("EXECUTE PROCESS FOR DISPATCHING VM") follows thereafter. The step ⑧ also follows after the step ⑦. Then the routine reaches step ⑨ ("EXIT").

As previously mentioned, the virtual machine system of the present invention includes no such large amount of software as expressed by the flowchart in Fig. 4, and the same functions can be achieved by very simple hardware, instead of said software. In short, in the virtual machine system of the present invention, which virtual machine system is provided with management programs which are used for running a plurality of $OS_s$ in parallel, a modification register and pending register are accommodated therein. The modification register operates so as to modify the PSW which controls each OS and the pending register operates so as to hold the pending interrupt with respect to each OS, and thereby it is not necessary for the VMM to execute the corresponding process every time the OS changes the PSW, through the asynchronous interrupt under the control of said management program.

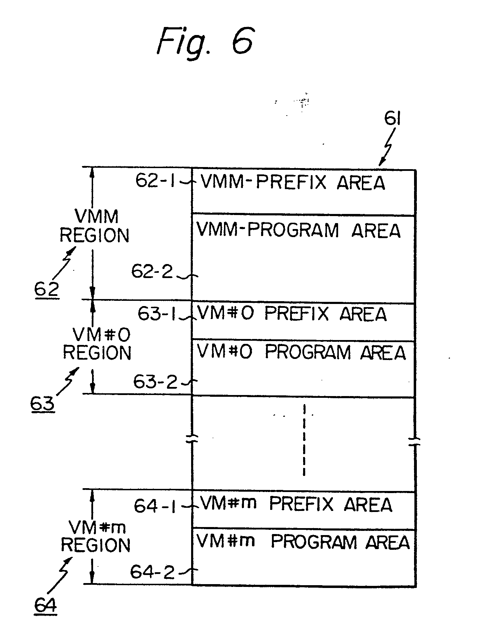

Fig. 5 illustrates a block diagram of hardware employed in a virtual machine system according to the present invention. Fig. 6 depicts a conventional organization of the main storage which is suitable for operating the hardware of Fig. 5. In Fig. 6, the reference numeral 61 indicates the main storage of the real machine 11 (Fig. 2). The main storage 61 is basically composed of a VMM region 62, a VM≠o region 63 through a VM≠m region 64. The VMM region 62 is comprised of both a VMM prefix area 62-1 and a VMM program area 62-2. The VM≠o region 63 is also comprised of both a VM≠o-prefix area 63-1 and a VM≠o-program area 63-2, and similarly, the VM≠m region 64 is comprised of both a VM≠m-prefix area 64-1 and a VM≠m-program area 64-2. The VM≠o-region 63 stores information with regard to the corresponding OS 24-o (see Fig. 2). The VM≠m region 64 also stores information with regard to the corresponding OS 24-m (see Fig. 2).

With reference to Fig. 5 which shows the essential part of the present invention, the reference numeral 51 represents a VM controlling PSW register. The register 51 acts as a register to store the PSW for controlling the VM to be dispatched. The register 51 is comprised of a plurality of bits which indicate information of, for example, the I/O mask, the EXT (external) mask, the MCH (machine check) mask and so on. The information contained in the register 51 is updated every time the VM is dispatched. The reference numeral 52 represents a current PSW register. The hardware of the virtual machine system is controlled according to the information contained in the register 52. The reference numeral 53 represents a modification register. The register 53 contains information of, for example, the I/O mask, the EXT mask, the MCH mask and so on. However, only the I/O, EXT and MCH masks are shown in Fig. 5. Each item of information in the register 51 and each item of the corresponding information are supplied to the corresponding mask bit of the register 52, via the respective OR gates 55-1, 55-2 and 55-3.

The respective items of information in the modification register 53 are updated every time the VM is dispatched. The register 53 is useful for dealing with the case mentioned below. Assuming that for example, the VM≠o (see 20-o in Fig. 2) is currently running in the system, and, for example, that the VM≠m (see 20-m in Fig. 2) was previously running therein, and that it is expected that an I/O interrupt will occur, the corresponding information is set in the modification register 53, which I/O interrupt was initiated during the running of the VM≠m in accordance with the instruction for starting the I/O device which came from the VM≠m. In this case, even though the I/O mask of the register 51 was instructed by the VM≠o to close, the I/O interrupt of the VM≠m can be alive. That is, the I/O interrupt of the VM≠m is reflected in the register 52 via the OR gate 55-1. In other words, even if the information of the I/O mask in the register 51 is set to the logic "0" by the VM≠o, which logic "0" indicates that the I/O mask should be closed, the corresponding I/O mask register 52 can be set to the logic "1", because the logic "1" which has been set in the corresponding I/O mask in the register 53 is given to the corresponding I/O mask in the register 52 via the OR gate 55-1. Thus, said I/O interrupt can be allowed to be effective in the system. At the same time, the information of said I/O interrupt is loaded in a control block corresponding to the VM≠m of the VMM region 62 (Fig. 6) contained in the main storage 61.

The above mentioned process corresponds to the operation defined by the steps ③ and ④ of the prior art shown in Fig. 4. If the result of the step ③ is "NO", the I/O mask in the register 51 is set to the logic "1". This logic "1" is directly supplied to the I/O mask in the register 52 via the gate 55-1, which operation corresponds to the step ⑤ shown in Fig. 4.

Provided that the VM≠o is now running in the system, and, for example, the VM≠m was previously running there in and the I/O interrupt of the VM≠m has been provided during the running of the VM≠m, this I/O interrupt of the VM≠m is stored in a memory area, corresponding to a pending register 54, of a control block contained in the main storage 61, when the I/O interrupt of the VM≠m is detected by the VMM during the running of the VM≠o. Thus, the memory area, corresponding to the register 54, has a logic "1" indicating the pending I/O interrupt of the VMm. The information of this pending I/O interrupt having a logic "1" is transferred to the corresponding bit of the I/O pending in the register 54, which is mounted in the CPU (real machine), when the VM≠m is dispatched. Consequently, the I/O interrupt of the VM≠m can be transferred to the VM≠m.

The modification register 53 and the pending register 54 are located in the CPU (real machine). These registers are not sensible to the programs of the VMs. This is because the programs of VMs are only sensible of the current PSW register 52. The information contained in these registers 51 and 54 are updated by the VMM every time the VM is dispatched.

For example, when the VM≠o is running in the system and also the I/O mask bit in the register 53 is set to logic "1", the corresponding I/O mask bit in the register 52 can be changed to logic "1" via the OR gate 55-1. Therefore, even though the VM≠o is instructed to close its I/O mask, the corresponding I/O mask in the register 52 cannot be closed. Thus, the register 52, which controls the hardware of the virtual machine system, allows other VMs to perform the I/O interrupt with respect to the VM≠o. In other words, even though the VM≠m has been provided with the instruction for starting the I/O device and, further, even if the

I/O interrupt, corresponding to said instruction for starting the I/O device, is generated during the running of the VM#o, the VMM can collect the I/O interrupt, and the information indicating the generation of said I/O interrupt is stored in a control block corresponding to the VM#m, of the VMM region 62.

On the other hand, under the condition where the information of the I/O interrupt is stored in the control block corresponding to the VM#m, if the VM#m is dispatched, the VMM loads the information stored in said memory area, corresponding to the register 54, into the register 54 of the CPU, and also the VMM loads the information stored in a memory area, corresponding to the register 51, of the control block contained in the main storage 61, into the register 51 of the CPU, in order to dispatch the VM#m. In this case, if the I/O mask bit of the register 51 is logic "1" which indicates that the interrupt can be conducted, the corresponding AND gate 56-1 is opened. Then the I/O interrupt operation can be conducted with respect to the VM#m in response to the information produced from the OR gate 57 via the AND gate 56-1. Thus, the pending I/O interrupt, with respect to the VM#m, can correctly be reflected to the VM#m. The above operations correspond to the operations defined by the steps ⑥, ⑦ and ⑧. If there is no pending I/O interrupt, the current process is continued by dispatching the VM#m.

In Fig. 5, the register 53 and 54 must store the mask information and pending information, respectively. The register 53 should contain the I/O mask information and the register 54 should contain the I/O pending information. This is because the I/O interrupt is generated in the system very frequently. The register 53 can contain the MCH mask information, if necessary, and accordingly the register 54 will contain the MCH pending information, if necessary, if the MCH mask information is entered into the register 53.

As mentioned above, according to the invention, it is possible for the virtual machine system to suppress the overhead which is created during the simulation of the privileged instruction which is used for controlling the PSW. It is however preferable to combine the means for suppressing the overheads created by privileged instructions which are used for controlling the timer and the management of the virtual storage with the means for suppressing the overhead created by the privileged instruction for the PSW. Thus, a virtual machine system having a high degree of operating speed and a high degree of efficiency can be realized.

**Claims**

1. A virtual machine system provided with management programs which are used for running a plurality of operating systems in parallel, the virtual machine system including:

a real machine controlling the PSW (program status word) register which stores the PSW information, including at least one interrupt mask bit, currently controlling the real machine hardware characterised in that the virtual machine system further comprises

a virtual machine controlling PSW register (51) which stores the PSW information, including at least one interrupt mask bit, controlling the operating system currently being run on the real machine;

a modification register (53) which stores information including at least one interrupt mask bit, relating to operating system other than the one currently being run;

a pending register (54) which stores information indicating that an interrupt is pending for the operating system currently being run on the real machine;

a first gating means (55) having inputs connected to the virtual machine controlling PSW register (51) and to the modification register (53) the first gating means being operative to cause the PSW information in the real machine controlling PSW register (52) to indicate that an interrupt is to be effective, even when the virtual machine controlling PSW register (51) indicates that said interrupt is to be masked, if the information contained in the modification register indicates that the said interrupt is to be effective for an operating system other than the one currently being run, in which case information concerning a possible interrupt is stored as an interrupt pending for said other operating system; and

a second gating means (56, 57) having inputs connected to the virtual machine controlling PSW register (51) and to the pending register (54), the second gating means being operative to pass the information concerning a pending interrupt contained in the pending register (54) if the PSW information in the virtual machine controlling PSW register (51) indicates that said interrupt is to be effective so that the pending interrupt, with respect to the operating system currently being run on the real machine, is communicated to this operating system.

2. A system as set forth in claim 1, wherein the type of interrupt in respect of which information is contained in the modification register (53) and pending register (54) is determined by the management programs.

3. A system as set forth in claim 1 or 2, wherein the first gating means (55) comprises at least one OR gate (55-1) having a first input which is connected to one bit of the virtual machine controlling PSW register (51) and a second input connected to the corresponding bit of the modification register (53), the output of the said OR gate supplying the corresponding current PSW information to the real machine controlling PSW register (52).

4. A system as set forth in claim 1, 2 or 3, wherein the second gating means comprises at least one AND gate (56-1) having a first input connected to one bit of the virtual machine controlling PSW register (51) and a second input connected to the corresponding bit of the pending register (54), the output of the said AND gate supplying the corresponding information which reflects the pending interrupt.

5. A system as set forth in any preceding claim, wherein the modification register (53) contains I/O mask information.

6. A system as set forth in claim 5, wherein the modification register (53) further contains EXT (external) mask information.

7. A system as set forth in claim 6, wherein the modification register (53) further contains MCH (machine check) mask information.

8. A system as set forth in claims 5, 6 or 7, wherein the pending register (54) contains pending information, each pending information always forming a pair with each corresponding mask information contained in the modification register (53).

9. A system as set forth in claim 8, wherein the virtual machine controlling PSW register (51) contains at least I/O mask information, EXT mask information and MCH mask information.

**Patentansprüche**

1. Virtuelles Maschinensystem mit Verwaltungsprogrammen, welche zur parallelen Ausführung einer Vielzahl von Betriebssystemen verwendet werden, mit:

einen die reale Maschine steuernden PSW (Programmstatuswort)-Register, welches die PSW-Information speichert, die wenigstens ein Unterbrechungsmaskenbit umfaßt, welches gegenwärtig die reale Maschinenhardware steuert, gekennzeichnet durch

eine die virtuelle Maschine steuerndes PSW-Register (51), welches die PSW-Information speichert, die wenigstens eine Unterbrechungsmaskenbit umfaßt und das gegenwärtig auf der realen Maschine ablaufende Betriebssystem steuert,

einem Modifikationsregister (53), welches die Information speichert, die wenigstens ein Unterbrechungsmaskenbit enthält und ein von dem gegenwärtig laufenden Betriebssystem verschiedenes Betriebssystem betrifft,

ein Schweberegister (54), welches Information speichert, die anzeigt, daß eine Unterbrechung für das Betriebssystem, welches gegenwärtig auf der realen Maschine abläuft, ansteht,

eine erste Verknüpfungsschaltung (55), deren Eingänge mit dem die virtuelle Maschine steuernden PSW-Register (51) und mit dem Modifikationsregister (53) verbunden sind und die funktionsfähig ist, um zu verursachen, daß die PSW-Information in dem die reale Maschine steuernden PSW-Register (52) anzeigt, daß eine Unterbrechung wirksam werden soll, selbst wenn das die virtuelle Maschine steuernde PSW-Register (51) anzeigt, daß die Unterbrechung maskiert werden soll, falls die in dem Modifikationsregister enthaltene Information anzeigt, daß die genannte Unterbrechung für eine von dem gegenwärtig laufenden Betriebssystem verschiedene Betriebssystem effektiv sein soll, in welchem Falle die Information, welche eine Mögliche Unterbrechung betrifft, als eine anstehende Unterbrechung für das genannte andere Betriebssystem gespeichert wind, und

eine zweite Verknüpfungsschaltung (56, 57), deren Eingänge mit dem die virtuelle Maschine steuernden PSW-Register (51) und mit dem Schweberegister (54) verbunden sind und die funktionsfähig ist, um die Information hindruch zu lassen, welche einen in dem Schweberegister (54) enthaltene anstehende Unterbrechung betrifft, falls die PSW-Information in dem die virtuelle Maschine steuernden PSW-Register (51) anzeigt, daß die genannte Unterbrechung effektiv sein soll, so daß die schwebende Unterbrechung bezüglich des gegenwärtig auf der realen Maschine laufenden Betriebssystems diesem Betriebssystem mitgeteilt wird.

2. System nach Anspruch 1, bei welchem die Art der Unterbrechung bezüglich welcher die Information in dem Modifikationsregister (53) und dem Schweberegister (54) enthalten ist, durch die Verwaltungsprogramme bestimmt wird.

3. System nach Anspruch 1 oder 2, bei welchem die erste Verknüpfungsschaltung (55) wenigstens ein ODER-Glied (55-1) umfaßt, welches einen mit einem Bit des die virtuelle Maschine steuernden PSW-Registers (51) verbundenen ersten Eingang und einen mit dem entsprechenden Bit des Modifikationsregisters (53) verbundenen zweiten Eingang hat und dessen Ausgang dem die reale Maschine steuernden PSW-Register (52) die entsprechende laufende PSW-Information liefert.

4. System nach einem der Ansprüche 1, 2 oder 3, bei welchem die zweite Verknüpfungsschaltung wenigstens ein UND-Glied (56-1) umfaßt, welches einem mit einem Bit des die virtuelle Maschine steuernden PSW-Registers (51) verbundenen ersten Eingang und einen mit dem entsprechenden Bit des Schweberegisters (54) verbundenen zweiten Eingang hat und dessen Ausgang die entsprechende Information liefert, welche die schwebende Unterbrechung reflektiert.

5. System nach einem der vorhergehenden Ansprüche, bei welchem das Modifikationsregister (53) I/O-Maskeninformation enthält.

6. System nach Anspruch 5, bei welchem das Modifikationsregister (53) ferner EXT (externe)-Maskeninformation enthält.

7. System nach Anspruch 6, bei welchem das Modifikationsregister (53) ferner MCH (Maschinenfehler)-Maskeninformation enthält.

8. System nach den Ansprüchen 5, 6 oder 7, bei welchem das Schweberegister (54) schwebende Informationen enthält, welche stets mit der entsprechenden Maskeninformation, welche in dem Modifikationsregister (53) enthalten ist, ein Paar bildet.

9. System nach Anspruch 8, bei welchem das die virtuelle Maschine steuernde PSW-Register (51) wenigstens I/O-Maskeninformation, EXT-Maskeninformation und MCH-Maskeninformation enthält.

## Revendications

1. Un système de machine virtuelle comportant des programmes de gestion qui sont utilisés pour faire fonctionner en parallèle plusieurs systèmes d'exploitation, ce système de machine virtuelle comprenant:

un registre de MEP (mot d'état de programme) de commande de machine réelle, qui enregistre l'information de MEP, comprenant au moins un bit de masque d'interruption, commandant le matériel de la machine réelle au moment considéré, caractérisé en ce que le système de machine virtuelle comprend en outre:

un registre de MEP de commande de machine virtuelle (51) qui enregistre l'information de MEP, comprenant au moins un bit de masque d'interruption, commandant le système d'exploitation qui fonctionne au moment considéré sur la machine réelle;

un registre de modification (53) qui enregistre une information comprenant au moins un bit de masque d'interruption, concernant un système d'exploitation autre que celui qui fonctionne au moment considéré;

un registre d'interruption en attente (54) qui enregistre une information indiquant qu'une interruption est en attente pour le système d'exploitation qui fonctionne au moment considéré dans la machine réelle;

des premiers moyens de transmission sélective (55) qui comportent des entrées connectées au registre de MEP de commande de machine virtuelle (51) et au registre de modification (53), les premiers moyens de transmission sélective faisant en sorte que l'information de MEP dans le registre de MEP de commande de machine réelle (52) indique qu'une interruption doit être effective, même lorsque le registre de MEP de commande de machine virtuelle (51) indique que cette interruption doit être masquée, si l'information contenue dans le registre de modification indique que l'interruption considérée doit être effective pour un système d'exploitation autre que celui qui fonctionne au moment considéré, auquel cas l'information concernant une interruption possible est enregistrée en tant qu'interruption en attente pour cet autre système d'exploitation; et

des seconds moyens de transmission sélective (56, 57) ayant des entrées connectées au registre de MEP de commande de machine virtuelle (51) et au registre d'interruption en attente (54), les seconds moyens de transmission sélective transmettant l'information concernant une interruption en attente contenue dans le registre d'interruption en attente (54) si l'information de MEP dans le registre de MEP de commande de machine virtuelle (51) indique que cette interruption doit être effective, de façon que l'interruption en attente, concernant le système d'exploitation en cours d'utilisation dans la machine réelle, soit transmise à ce système d'exploitation.

2. Un système selon la revendication 1, dans lequel les programmes de gestion déterminent le type d'interruption pour laquelle une information est contenue dans le registre de modification (53) et le registre d'interruption en attente (54).

3. Un système selon la revendication 1 ou 2, dans lequel les premiers moyens de transmission sélective (55) comprennent au moins une porte OU (55-1) ayant une première entrée qui est connectée à un bit du registre de MEP de commande de machine virtuelle (51) et une seconde entrée connectée au bit correspondant du registre de modification (53), la sortie de cette porte OU fournissant l'information de MEP courante correspondante au registre de MEP de commande de machine réelle (52).

4. Un système selon la revendication 1, 2 ou 3, dans lequel les seconds moyens de transmission sélective comprennent au moins une porte ET (56-1) ayant une première entrée connectée à un bit du registre de MEP de commande de machine virtuelle (51) et une seconde entrée connectée au bit correspondant du registre d'interruption en attente (54), la sortie de cette porte ET fournissant l'information correspondante qui représente l'interruption en attente.

5. Un système selon n'importe quelle revendication précédente, dans lequel le registre de modification (53) contient une information de masque d'E/S.

6. Un système selon la revendication 5, dans lequel le registre de modification (53) contient en outre une information de masque EXT (externe).

7. Un système selon la revendication 6, dans lequel le registre de modification (53) contient en outre une information de masque MCH (contrôle de machine).

8. Un système selon les revendications 5, 6 ou 7, dans lequel le registre d'interruption en attente (54) contient une information en attente, et chaque information en attente forme toujours une paire avec chaque information de masque correspondante contenue dans le registre de modification (53).

9. Un système selon la revendications 8, dans lequel le registre de MEP de commande de machine virtuelle (51) contient au moins une information de masque d'E/S, une information de masque EXT et une information de masque MCH.

*Fig. 1*

REAL MACHINE — 11

14

O S — 12

USER PROGRAM #0 — 13-0    15-0

USER PROGRAM #n — 13-n    15-n

# Fig. 2

REAL MACHINE — 11

21

VMM — 22

20-0 20-m

VM#0 VM#m

23-0 23-m

OS #0 OS #m — 24-m

24-0

25-mn

25-00 25-0n 25-m0

USER PROGRAM #0    USER PROGRAM #n    USER PROGRAM #0    USER PROGRAM #n

26-00    26-0n    26-m0    26-mn

0 0024 434

# Fig. 3

# Fig. 4

ENTRY — ①

SAVE A REGISTER — ②

③ DOES INSTRUCTION SPECIFY TO CLOSE MASK OF PSW? — YES / NO

⑤ REFLECT DESIRED BIT IN CURRENT PSW

④ REFLECT CURRENT PSW SO AS NOT TO CLOSE CORRESPONDING MASK

⑥ IS THERE ASYNCHRONOUS INTERRUPT WITH RESPECT TO CORRESPONDING VM? — YES / NO

⑦ REFLECT PENDING INTERRUPT IN CORRESPONDING VM

⑧ EXECUTE PROCESS FOR DISPATCHING VM

EXIT — ⑨

4

# Fig. 5

# Fig. 6